# EUROPEAN PATENT APPLICATION

(11) **EP 3 372 550 A1**
(43) Date of publication of application: **12.09.2018**
(21) Application number: 18160913.2
(22) Date of filing: 09.03.2018
(51) Int. Cl.: B66C 23/20, F03D 13/10

(54) **LIFTING SYSTEM**

(30) Priority: 10.03.2017 US 201762469626 P
(71) Applicant: LiftWerx Holdings Inc., Cambridge, ON N1T 1N7 (CA)
(72) Inventor: Aitken, Glen D., Fergus, ON, N1M 1W2 (CA)
(74) Representative: Patentanwälte Bals & Vogel

(57) **Abstract**

A lifting system (100) mountable on a standing wind turbine (1) may be used to lower and raise turbine parts (e.g. a rotor) between the turbine and ground level for maintenance or replacement of the parts. The lifting system has a support structure configured to be reversibly mountable on a standing wind turbine and a lifting appliance (150). The lifting appliance has a base (151) configured to be reversibly mountable on the support structure, a boom (160) pivotally connected to the base, a back mast (180) pivotally connected to the base, rigging connecting the boom to the back mast and the back mast to a counterweight, and a hoist (164) mounted on the boom. The hoist configured to be connectable to a part of the wind turbine when the support structure is mounted on the wind turbine and the base is mounted on the support structure.

## Description

### Field

This application relates to lifting systems, especially to a lifting appliance mountable on wind turbines.

### Background

Wind turbines require periodic maintenance to remain operable. Due to the extreme height at which many wind turbines operate, maintaining and/or replacing turbine parts (e.g. a rotor, blade, main bearing, main shaft) when the turbine is mounted atop a tower becomes problematic. For reasons of safety and practicality, turbine parts are generally lowered to ground level for maintenance and/or replacement. Typically, a crane is used to lower (and then re-raise) the parts to be maintained or replaced.

Two types of cranes have been developed that are used for various purposes in connection with wind turbine maintenance and construction. One type is a ground-supported boom crane having an extremely long boom supported on ground-based platform with a very large counter weight to balance loads being lifted at a distal end of the boom. Another type is a turbine-mounted crane or a tower-mounted crane where the crane is supported on the turbine at a top of the tower or is supported somewhere along the tower on which the turbine is mounted. The former type of crane is able to handle heavier loads, but are very expensive to build and transport. The latter type of crane is smaller and cheaper to build and transport, but are incapable of handling heavier loads, such as the rotor of the wind turbine.

Many wind turbines are constructed having a jib crane already mounted on the wind turbine for handling light loads (up to 1 ton). Recently, a crane has been developed, which may be hoisted up to a top of the tower to be mounted on the wind turbine to handle heavier loads (WO 2016/055065) up to 25 tons. However, both of these cranes are unable to handle the 70 tons needed for lifting a wind turbine rotor.

There remains a need for a turbine-mounted crane that is capable of lifting very heavy loads, and for a method of mounting and dismounting such a crane on a wind turbine mounted atop a tower.

### Summary

A lifting appliance and a system comprising the lifting appliance are provided, which are mountable on a standing wind turbine. The lifting appliance is capable of lifting very heavy loads, for example a rotor of the wind turbine. A method of mounting and/or dismounting such a lifting appliance and system onto a wind turbine standing atop a tower is also provided. The lifting appliance, system and method are useful for removing a part (e.g. rotor, blade, main bearing, main shaft and the like) of a standing wind turbine for replacement or maintenance, and for remounting or replacing the part on the standing wind turbine.

In one aspect, there is provided a lifting system comprising: a support structure configured to be reversibly mountable on a standing wind turbine; and, a lifting appliance comprising a base configured to be reversibly mountable on the support structure, a boom pivotally connected to the base, a back mast pivotally connected to the base, rigging connecting the boom to the back mast and the back mast to a counterweight, and a hoist mounted on the boom, the hoist configured to be connectable to a part of the wind turbine when the support structure is mounted on the wind turbine and the base is mounted on the support structure.

The support structure may comprise a bridge mounted to torque arm supports of the wind turbine. The bridge may comprise bridge supports mounted on the torque arm supports. The bridge may further comprise at least one beam, preferably at least two beams, supported on the bridge supports. The at least one beam may be supported over a main shaft, a gearbox or both the main shaft and the gearbox of the wind turbine. In one embodiment, the at least one beam may comprise two beams, a first beam situated over the main shaft of the wind turbine and a second beam situated over the gearbox of the wind turbine.

The base of the lifting appliance may comprise a bracket, which may fit over the support structure. In one embodiment, the bracket may have opposed substantially vertically oriented downwardly disposed bracket arms and the support structure may have at least one beam, which may be fitted between the opposed bracket arms when the base is mounted on the support structure.

The base may comprise a first portion to which the boom may be pivotally connected and a second portion to which the back mast may be pivotally connected. The first portion of the base may be supported on a first portion of the support structure (e.g. the first beam). The second portion of the base may be supported on a second portion of the support structure (e.g. the second beam).

The rigging may comprise a boom pendant connecting the boom to the back mast. The rigging may further comprise first and second luffer pendants extending downward from the back mast. The first and second luffer pendants may extend downwardly on either side of a nacelle of the wind turbine. The luffer pendants may be connected to the counterweight. The counterweight may be a large mass transported to the wind turbine, or a tower on which the wind turbine stands, or both. Preferably, the counterweight is the tower on which the wind turbine stands. The luffer pendants may be connected to anchor bolts of the tower, for example anchor bolts at a foundation of the tower. The luffer pendants may be further connected to a luffer winch. The luffer winch may be located in any convenient location, for example at ground level, on a transport vehicle or on the tower. The luffer pendants may be horizontally separated from the back mast by a spreader proximate a top of the luffer pendants to permit the luffer pendants to extend downward on either side of the nacelle.

The luffer pendants may be joined into a single line below the nacelle and above an upper luffer block containing a first set of sheaves. The single line may be threaded through the first set of sheaves of the upper luffer block and a second set of sheaves of a lower luffer block to form a block and tackle arrangement. The single line may be attached to the luffer winch below the lower luffer block. At least one reaction line may be connected to lower luffer block and the counterweight. In one embodiment, the at least one reaction line may be at least two reaction lines. Where the tower is the counterweight, more than one reaction line is preferred to reduce stresses at the connecting points on the tower, for example anchor bolts in a foundation of the tower. Preferably, there are at least two reaction lines, for example eight reaction lines.

The boom and the back mast may be deployable between a transport configuration and a deployed configuration. The boom and back mast may have a fixed angular relationship with respect to each other in the deployed configuration. The boom and the back mast may pivot together between an assembly position and a working position. The hoist may be in position for connection to the part when the boom and back mast are in the assembly position. The hoist may be in position for raising and lowering the part when the boom and back mast are in the working position. A hoist winch may be connected to the hoist by a lifting line. The hoist winch may be operable to raise and lower the hoist to raise and lower the part connected to the hoist.

The lifting appliance may further comprise a side mast connected to the boom. The side mast may be configured to route the lifting line away from and down a side of the wind turbine to the hoist winch. The side mast may be deployable between a stowed configuration and an unstowed configuration, where the unstowed configuration permits routing the lifting line away from and down a side of the wind turbine to the hoist winch while permitting movement of the lifting line for operating the hoist.

In another aspect, there is provided a method of mounting a lifting appliance on a standing wind turbine, the method comprising: operating a first crane mounted on a standing wind turbine to raise a second crane up to the wind turbine, and securing the second crane to the wind turbine; and, operating the second crane to raise the lifting appliance up to the wind turbine, and securing the lifting appliance to the wind turbine, wherein the first crane is capable of lifting the second crane but incapable of lifting the lifting appliance, the second crane is capable of lifting the lifting appliance but incapable of lifting a rotor of the wind turbine, and the lifting appliance is capable of lifting the rotor.

The first crane may be first operated to raise a support structure up to the wind turbine. The support structure may then be mounted to torque arm supports of the wind turbine. The first crane may then be operated to raise the second crane and the second crane may be secured to the support structure. The support structure comprises an outrigger portion on which the second crane may be mounted. The outrigger portion may extend outwardly from one side of a nacelle of the wind turbine when the support structure is mounted on the wind turbine.

In another aspect, there is provided a method of removing a part of a standing wind turbine, the method comprising: performing the method of mounting a lifting appliance on a standing wind turbine; securing the lifting appliance to a tower on which the wind turbine stands, wherein the lifting appliance comprises a boom and a back mast pivotally connected to a base in a fixed angular relationship when the boom and back mast are deployed in a deployed configuration, the back mast secured to the tower below the wind turbine by at least one luffer pendant such that the at least one luffer pendant may be used to pivot the boom and back mast between an assembly position and a working position when the boom and back mast are in the deployed configuration, and the tower provides a counterweight when the lifting appliance is raising or lowering a part of the wind turbine; deploying the boom and back mast into the deployed configuration; connecting a hoist of the lifting appliance to the part to be removed while the boom and back mast are in the assembly position; and, pivoting the boom and back mast into the working position.

Further features will be described or will become apparent in the course of the following detailed description. It should be understood that each feature described herein may be utilized in any combination with any one or more of the other described features, and that each feature does not necessarily rely on the presence of another feature except where evident to one of skill in the art.

### Brief Description of the Drawings

For clearer understanding, preferred embodiments will now be described in detail by way of example, with reference to the accompanying drawings, in which:
Fig. 1A is a rear perspective view of one embodiment of a lifting appliance mounted on a wind turbine.
Fig. 1B is a magnified view of a base of the lifting appliance illustrated in Fig. 1A.
Fig. 2A is a front perspective view of the lifting appliance illustrated in Fig. 1A.
Fig. 2B is a front perspective view of the base illustrated in Fig. 1B.
Fig. 3 is a different rear perspective view of the lifting appliance illustrated in Fig. 1A.
Fig. 4A is a rear side perspective view of a wind turbine having the lifting appliance illustrated in Fig. 1A mounted thereon.
Fig. 4B is a magnified view of the lifting appliance shown in Fig. 4A.
Fig. 4C is a magnified view of a lower section of the wind turbine illustrated in Fig. 4A.
Fig. 4D is a magnified view of a foundation of the wind turbine illustrated in Fig. 4A.
Fig. 5A, Fig. 5B, Fig. 5C, Fig. 5D, Fig. 5E, Fig. 5F, Fig. 5G, Fig. 5H and Fig. 5I depict a sequence of events in a method of mounting the lifting appliance illustrated in Fig. 1A on the wind turbine.
Fig. 6A and Fig. 6B depict the lifting appliance of Fig. 1A in operation to remove and lower a rotor of the wind turbine.
Fig. 6C and Fig. 6D are rear side perspective views of Fig. 6A and Fig. 6B, respectively.

### Detailed Description

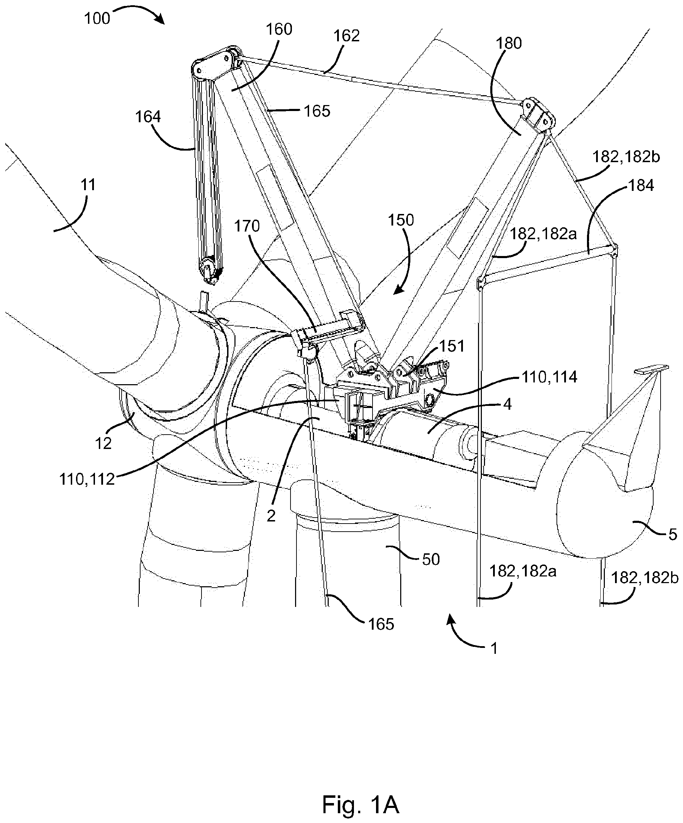

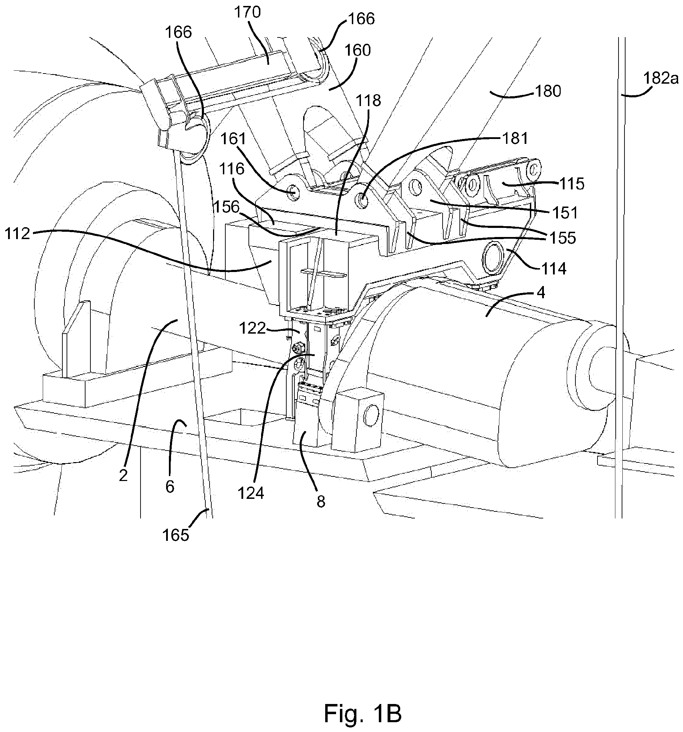

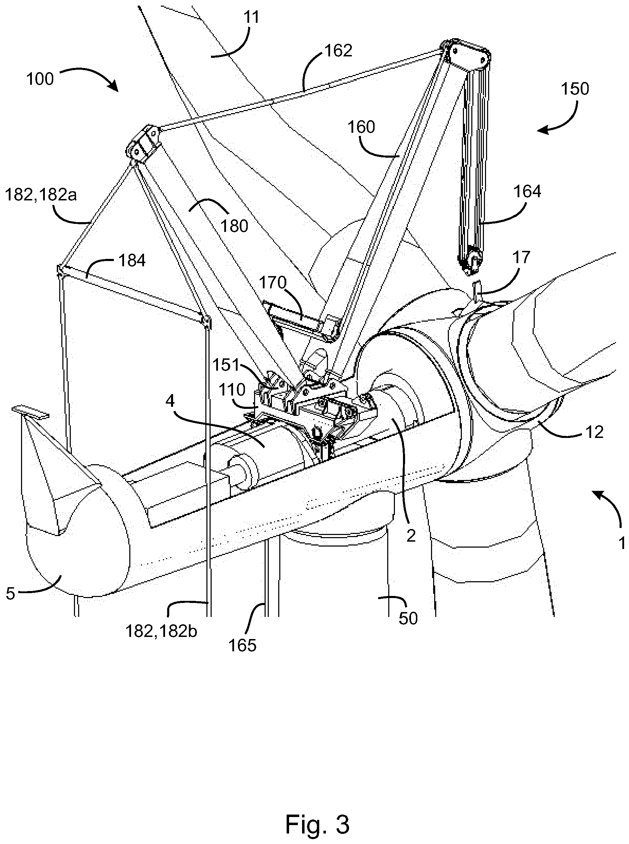

A lifting system **100** mounted on a wind turbine **1** standing atop a tower **50** is illustrated in Fig. 1A, Fig. 1B, Fig. 2A, Fig. 2B, Fig. 3, Fig. 4A, Fig. 4B, Fig. 4C and Fig. 4D. The wind turbine **1** comprises a nacelle **5** housing various mechanical components necessary for operation of the turbine **1.** The turbine **1** further comprises a rotor **10** comprising three rotor blades **11** (only one labeled) attached to a hub **12.** The construction and operation of wind turbines are generally known in the art.

The lifting system **100** may comprise a bridge **110** mounted on the wind turbine **1** and a lifting appliance **150** mounted on the bridge **110.**

The bridge **110** may comprise a main shaft bridge beam **112** spaced apart forwardly from a front gearbox pillow beam **114.** The main shaft bridge beam **112** may extend transversely across and over a main shaft **2** of the turbine **1** and may be supported on main shaft bridge supports **122,** the main shaft bridge supports **122** mounted on a portion of a floor **6** of the nacelle **5** of the wind turbine **1.** The front gearbox pillow beam **114** may extend transversely across and over a front gearbox **4** of the turbine **1** and may be supported on front gearbox pillow supports **124,** the front gearbox pillow supports **124** mounted on torque arm supports **8** for the main shaft **2** of the wind turbine **1.** Sufficient clearance underneath the beams **112, 114** may be maintained so that the main shaft **2** and the gearbox **4** do not support the weight of the lifting appliance **150** when the lifting appliance **150** is mounted on the bridge **110.**

The main shaft bridge beam **112** and the front gearbox pillow beam **114** may comprise upper surfaces **116** and **118,** respectively, on which the lifting appliance **150** may be mounted. The lifting appliance **150** may comprise a base **151** having downwardly-oriented flanges **155** at opposed ends of the base **151.** The flanges **155** and a lower abutment surface **156** of the base **151** may define a bracket spanning a width of the bridge **110** between outer edges of the beams **112, 114** when the base **151** is mounted on the beams **112, 114** with the lower abutment surface **156** of the base **151** abutting the upper surfaces **116, 118** of the beams **112, 114,** respectively. The flanges **155** prevent the base **151** from sliding off the beams **112, 114.** The base **151** may be further secured to the beams **112, 114** with fasteners (e.g. threaded screws, bolts, clamps and the like), if desired.

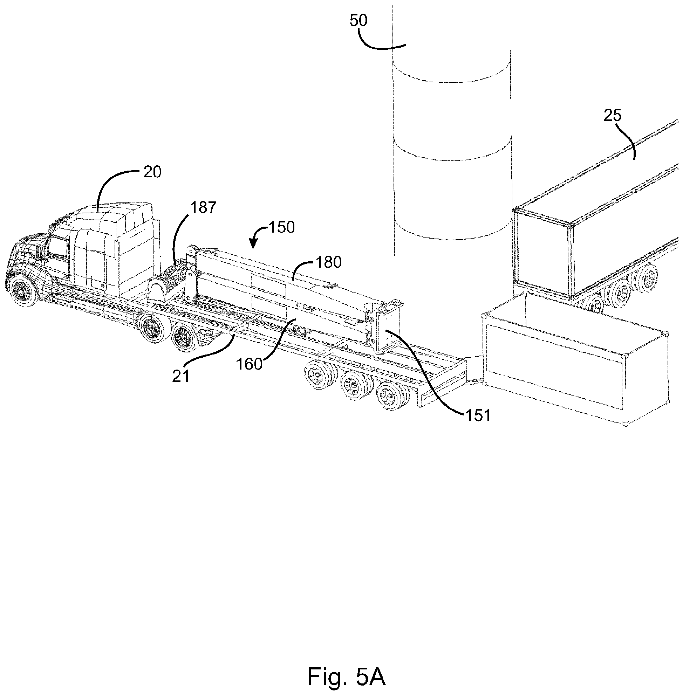

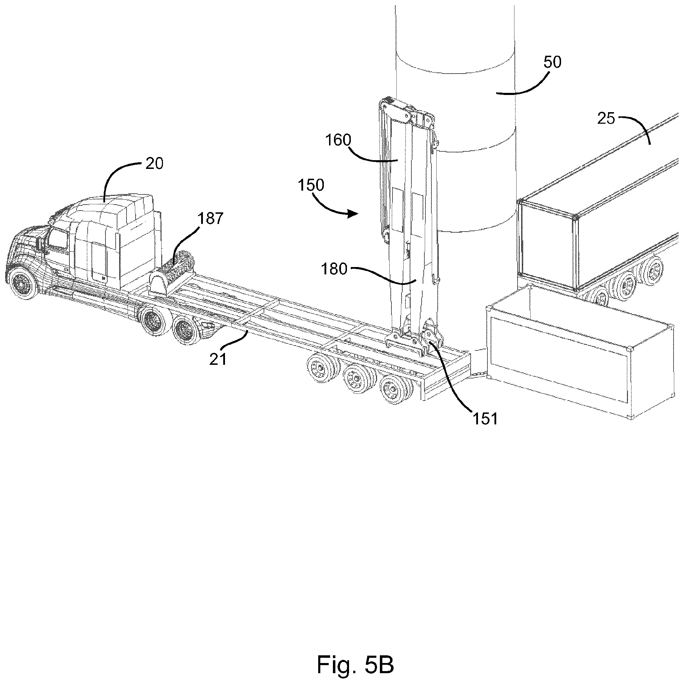

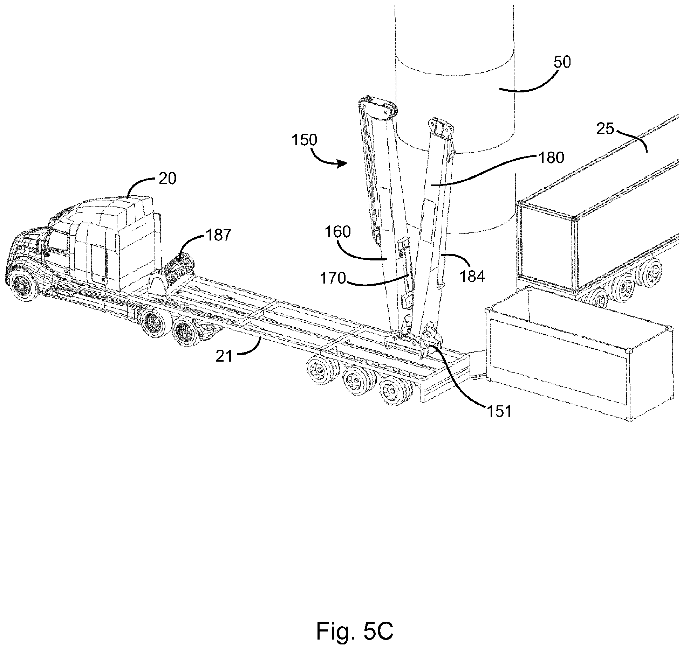

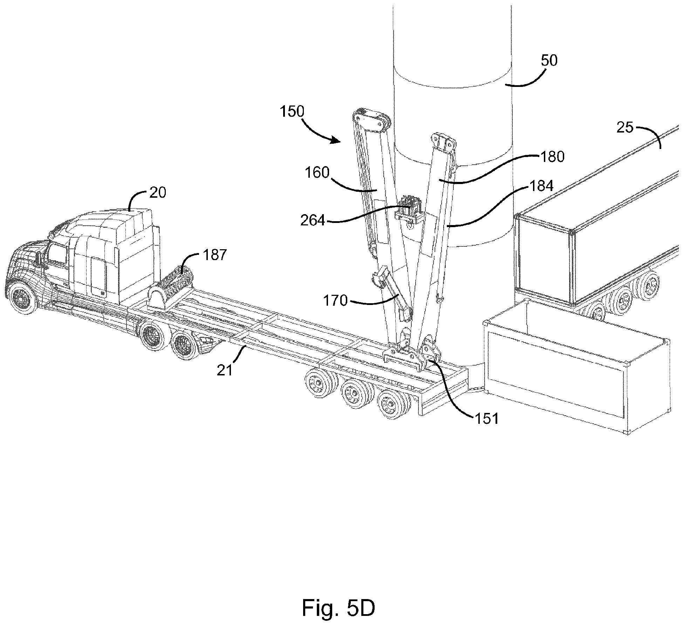

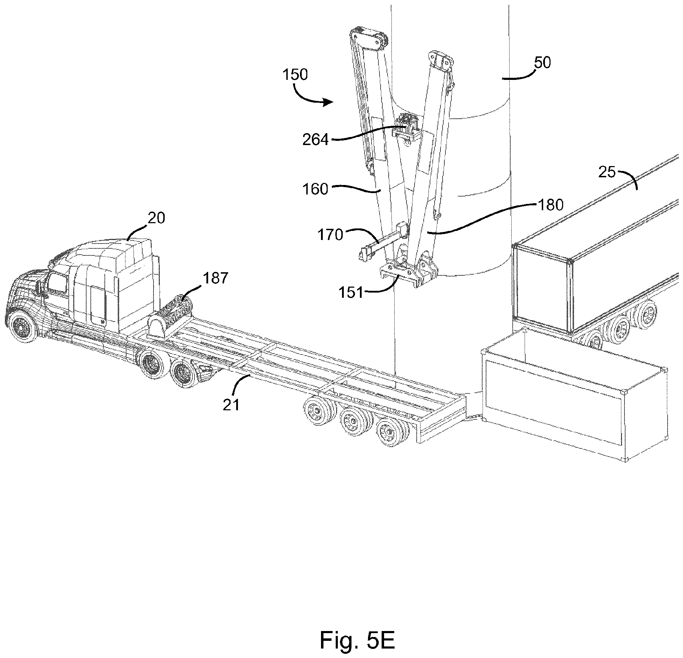

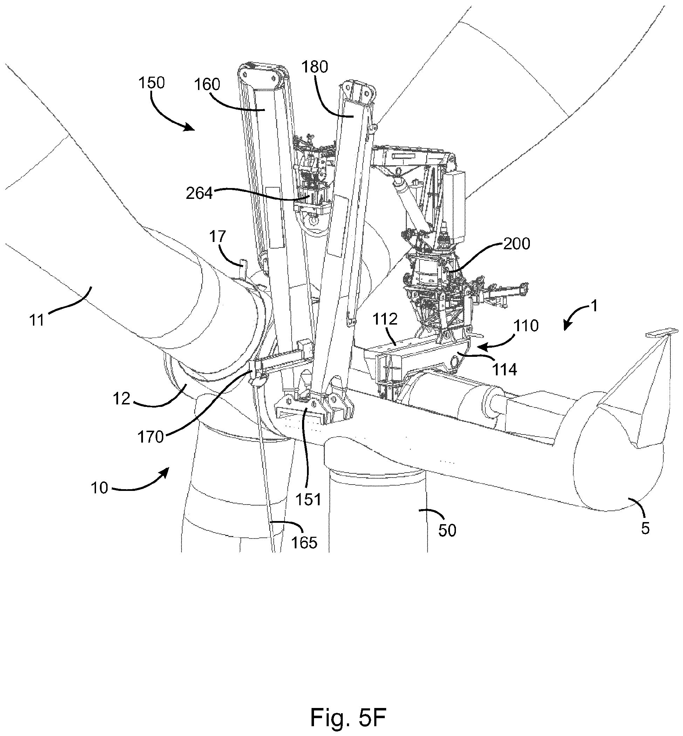

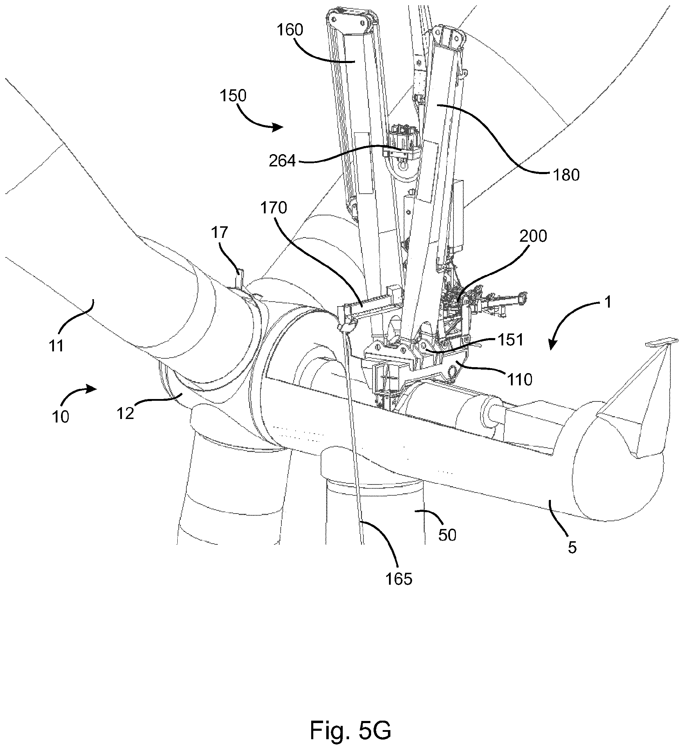

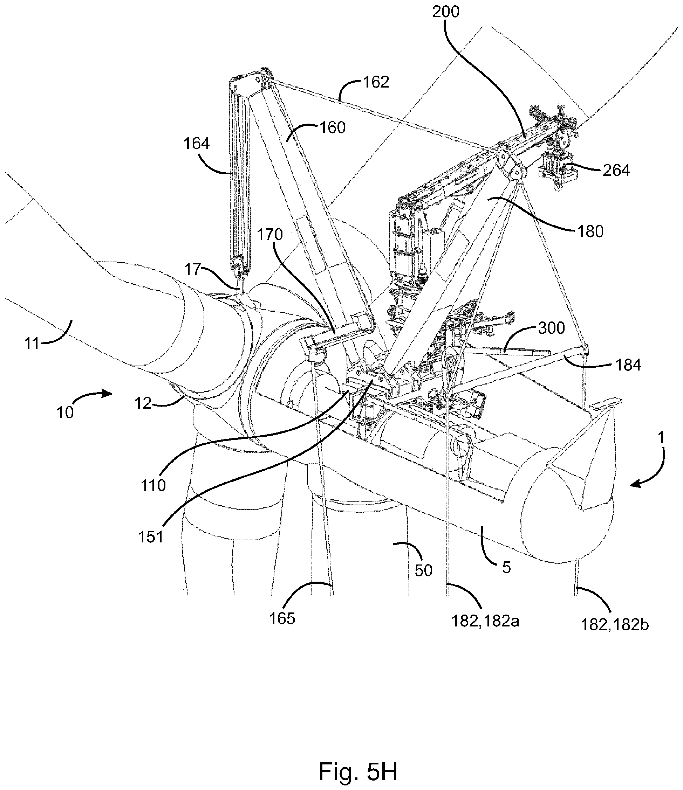

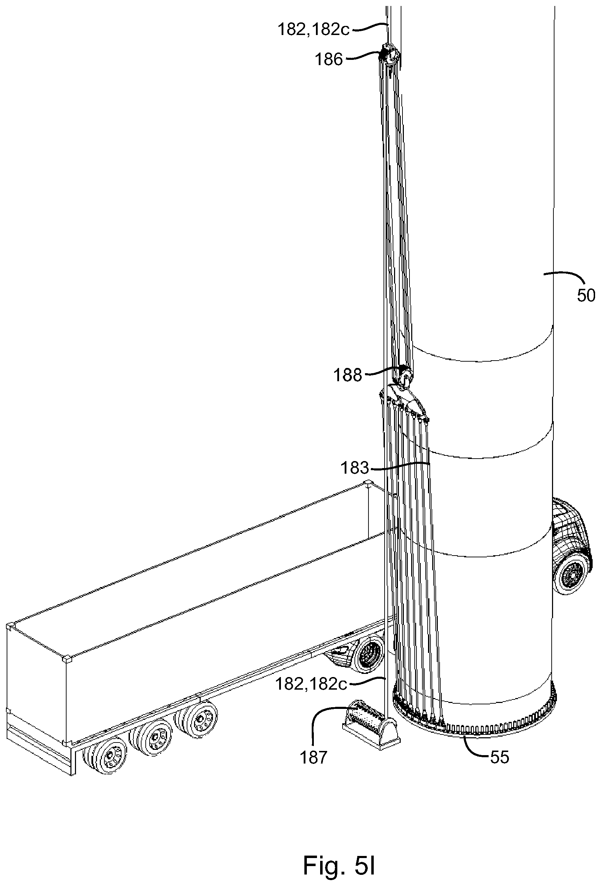

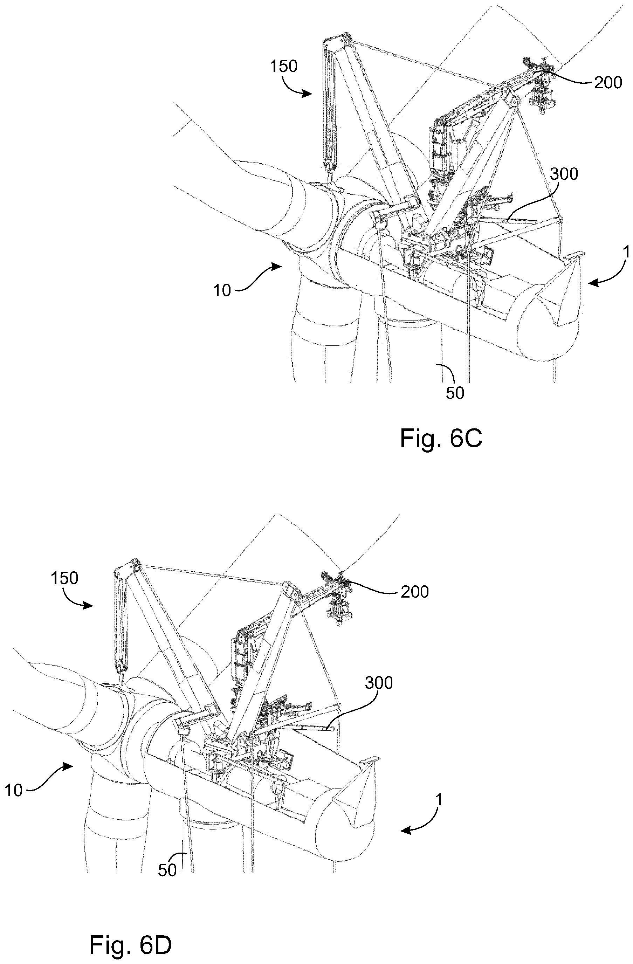

The beams **112, 114** may further comprise mounting tabs **113, 115,** respectively to which an auxiliary crane **200** (see Fig. 5F or Fig. 6C) may be mounted. The auxiliary crane **200** is capable of lifting the lifting appliance **150,** as further explained below in connection with Fig. 5A, Fig. 5B, Fig. 5C, Fig. 5D, Fig. 5E, Fig. 5F, Fig. 5G, Fig. 5H and Fig. 5I.

The lifting appliance **150** may further comprise a boom **160** and a back mast **180,** both of which are pivotally connected to the base **151** at pivot axes **161, 181,** respectively, proximate lower ends of the boom **160** and back mast **180.** The boom and the back mast may form a 'V-like' shape with the vertex of the 'V-like' shape at the base. The boom and the back mast preferably have similar length. The boom **160** and the back mast **180** may be mounted at any suitable location on the bridge **110;** however, the boom **160** and the back mast **180** are preferably mounted on the bridge **110** at a center line between the front gearbox pillow supports **124.** Further, the pivot axis **161** may be situated and oriented to be vertically aligned with an axis between the main shaft bridge supports **122,** and the pivot axis **181** may be situated and oriented to vertically align with an axis between the front gearbox pillow supports **124.** That is, the pivot axis **161** may be over the main shaft bridge supports **122,** and the pivot axis **181** may be over the front gearbox pillow supports **124.** The mounting locations of the boom **160** and back mast **180,** and the locations and orientations of the pivot axes **161, 181** contributes to the stability and lifting capacity of the lifting appliance **150** on the turbine **1.**

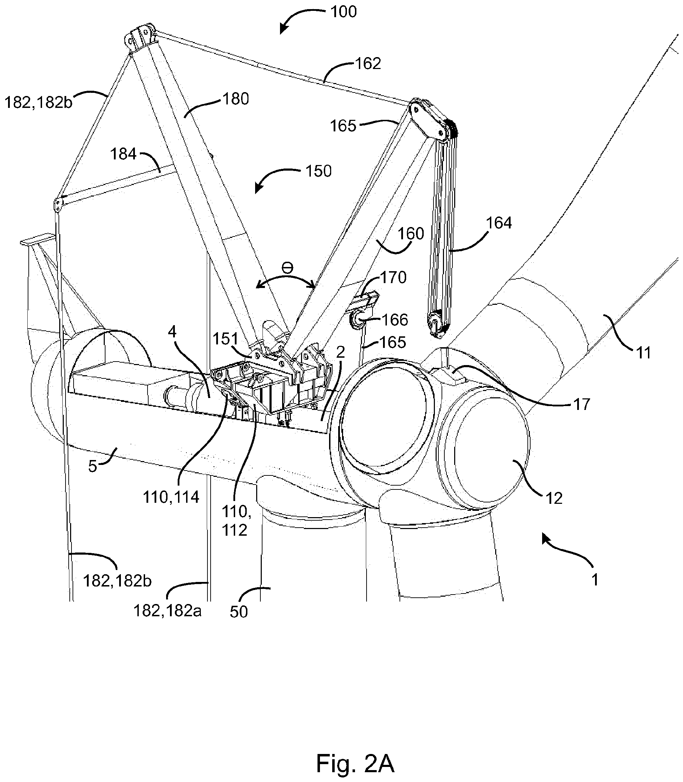

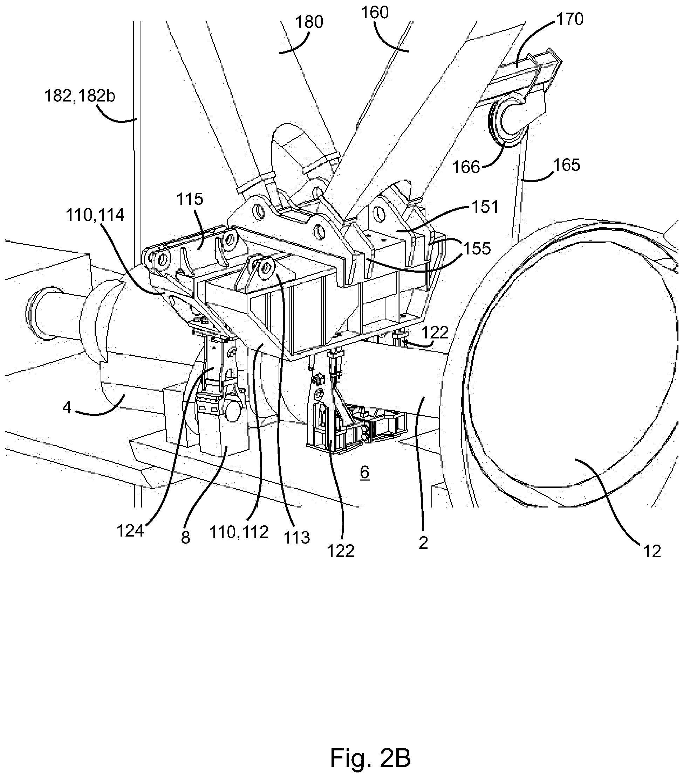

The boom **160** and back mast **180** may be connected together by a boom pendant **162,** which is preferably secured to the boom **160** and back mast **180** at or proximate top ends of the boom **160** and back mast **180,** although any other suitable locations along the boom and back mast may serve. The boom pendant **162** prevents the boom **160** and back mast **180** pivoting away from each beyond a fixed angle **θ** (see Fig. 2A). As further described below, the fixed angle **θ** is maintained when the lifting appliance **150** is deployed and in use. The angle **θ** is an angle suitable to optimize lifting capability without placing undue stresses on the boom **160.** The angle **θ** is preferably in a range of about 20° to about 120 °, more preferably in a range of about 65° to about 75 °, for example about 68°.

A hoist **164** may be connected to the boom **160** at or proximate a top end of the boom **160,** or any other suitable location along the boom. The hoist **164** may be attached to a main lifting line **165,** which may be attached to a hoist winch (not shown) operable to raise and lower the hoist. The hoist winch may be located at ground level with the main lifting line **165** extending down from the boom **160** at the top of the tower **50** to the hoist winch at a bottom of the tower **50.** To prevent interference of the nacelle **5** with the main lifting line **165,** a side mast **170** may be used to extend the main lifting line **165** beyond a side of the nacelle **5** above the nacelle **5** before the main lifting line **165** continues downward. The side mast **170** may be foldably attached to the boom **160.** For transport, the side mast **170** may be folded against the boom **160** so that longitudinal axes of the side mast **170** and the boom **160** are substantially parallel. In operation, the side mast **170** may be unfolded so that the side mast **170** generally extends at an angle transversely outwardly from the boom **160,** for example at a right angle. The side mast may be provided with main line sheaves **166** to direct the main lifting line **165** along the side mast **170** while permitting the main lifting line **165** freedom of motion to be winched.

Pivoting of the boom **160** and the back mast **180** permits the boom **160** to undergo luffing movement to move the hoist **164** between an assembly position and a working position. In the assembly position, the hoist **164** may be connected to or disconnected from the hub **12** of the rotor **10** while the rotor **10** is mounted on the turbine **1.** In the working position, the hoist **164** is able to lower or raise the rotor **10** to or from ground level. To enable pivoting of the boom **160** and the back mast **180,** thereby enabling luffing movement, as well as to prevent over-pivoting while simultaneously helping the boom **160** support a load, luffer pendants **182** may be employed. While two luffer pendants **182** are shown, one or more suitably arranged luffer pendants may be employed. The luffer pendants **182** may be connected to the back mast **180** at or proximate a top end of the back mast **180,** or any other suitable location along the back mast. To prevent interference of the nacelle **5** with the luffer pendants **182,** a spreader bar **184** located above the nacelle **5** and extending transversely across a width of the nacelle **5** may be used to separate the luffer pendants **182** by a sufficient distance that one luffer pendant **182a** can freely extend downward outside one side of the nacelle **5,** while the other luffer pendant **182b** can freely extend downward outside the other side of the nacelle **5.** The luffer pendants **182a, 182b** move during luffing movement of the boom **160** and the back mast **180,** and the luffer pendants **182a, 182b** may be slightly angled with respect to vertical, thereby making the spreader bar **184** desirable for preventing interference of the nacelle **5** with the luffer pendants **182.**

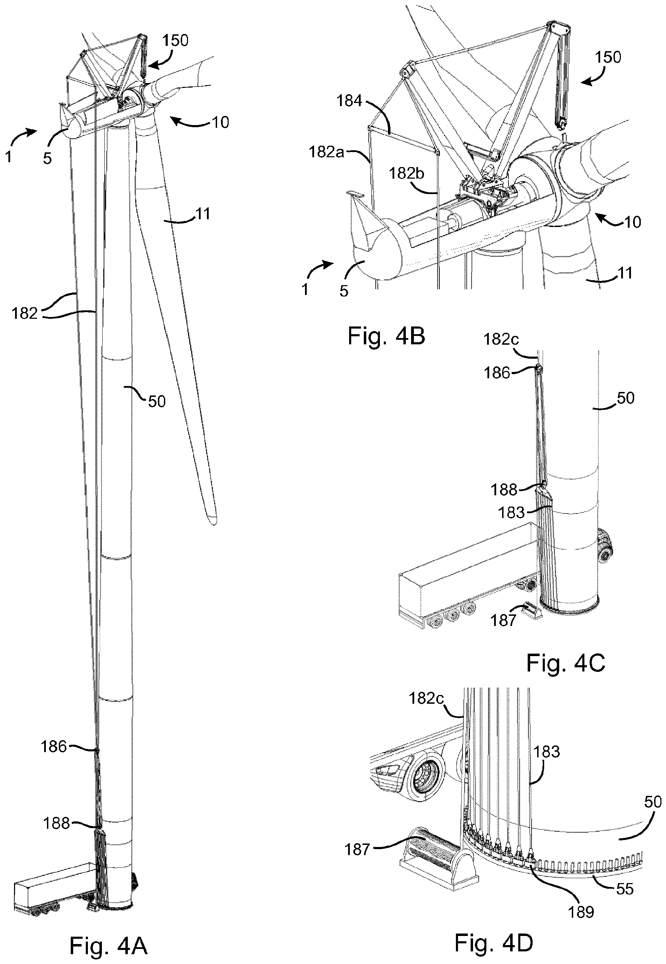

The luffer pendants **182** may be joined together in a single luffer line close to ground level above an upper luffer block **186.** The single luffer line may be threaded through the upper luffer block **186** and a lower luffer block **188,** and connected as a luffer line **182c** to a luffer winch **187** on the ground below the lower luffer block **188.** The luffer blocks **186, 188** may each comprise a plurality of sheaves and the single luffer line **182c** may be threaded through the sheaves of both luffer blocks **186, 188** in a block and tackle arrangement. Alternatively, the single luffer line formed above the upper luffer block **186** may be attached to the upper luffer block **186,** and a separate luffer winch line may be threaded through the upper luffer block and connected to the luffer winch and the upper luffer block. A plurality of reaction pendants **183** (only one of eight labeled) may be connected to the lower luffer block **188** (see Fig. 4C and Fig. 4D). The reaction pendants **183** may extend from the lower luffer block **188** to a foundation **55** of the tower **50** where the reaction pendants **183** may be connected to anchor bolts **189** (only one labeled) in the foundation **55** of the tower **50.** (see Fig. 4D). The luffer winch **187** may be operated to cause the boom **160** and the back mast **180** to pivot forward or backward, and the reaction pendants **183** connected to the tower **50** function as reaction lines to prevent the boom **160** and the back mast **180** from pivoting forward beyond a certain point. Further, the tower **50** itself acts as a counterweight by virtue of the reaction pendants **183** being connected thereto to assist the boom **160** in supporting the weight of a load (e.g. the rotor, blade, main bearing, main shaft or other part of the turbine). It is therefore unnecessary to provide a separate counterweight (although one could be provided if desired), which reduces the cost and complexity of transporting the lifting appliance from site to site, and reduces the need for a large footprint of land at ground level within which to operate.

With reference to Fig. 5A, Fig. 5B, Fig. 5C, Fig. 5D, Fig. 5E, Fig. 5F, Fig. 5G, Fig. 5H and Fig. 5I, a sequence of events is illustrated for mounting the lifting appliance 150 on the wind turbine **1.**

Equipment necessary for mounting the lifting appliance **150** on the turbine **1** standing atop the tower **50** may be transported to a work site in transport trailers **20, 25.** At the site, the nacelle **5** of the turbine **1** may be opened and an existing one-ton capacity jib crane **300** mounted on the turbine **1** may be deployed to lift the bridge **110** up to the turbine **1** from ground level. The bridge **110** may be mounted on the wind turbine **1** in a manner as described above. The jib crane **300** may then be deployed to lift the 25-ton capacity auxiliary crane **200** up to the turbine **1** from ground level, where the auxiliary crane **200** may be mounted on the bridge **110.** The jib crane **300** may also be operated to lift any lines required to be installed on the auxiliary crane **200** for proper operation of the auxiliary crane **200.** The auxiliary crane **200** may then be deployed for lifting the lifting appliance **150** from a trailer bed **21** of the tractor trailer **20.** An auxiliary crane winch (not shown) may be operated at ground level to enable the auxiliary crane **200** to lift lifting appliance **150.**

As seen in Fig. 5A, the lifting appliance **150** is transported on the trailer bed **21** in a prone position with the boom **160** and the back mast **180** folded together. As seen in Fig. 5B, the tractor trailer **20** may be positioned at the foundation **55** of the tower **50** so that when the lifting appliance **150** is stood up on the base **151,** the lifting appliance **150** is in a correct location directly under the auxiliary crane **200.** As seen in Fig. 5C, with the lifting appliance **150** in an erect orientation, the boom **160** and back mast **180** may be pivoted on the base **151** to provide a small separation between the boom **160** and the back mast **180.** The side mast **170** and the spreader bar **184** still remain in undeployed positions having respective longitudinal axes parallel to longitudinal axes of the boom **160** and the back mast **180,** respectively.

As seen in Fig. 5D, an auxiliary crane hoist **264** at the end of an auxiliary crane hoist line (not shown) may be lowered by the auxiliary crane **200** into the separation between the boom **160** and back mast **180.** Additionally, the side mast **170** may be folded away from the boom **160** into a deployed position. With the auxiliary crane hoist **264** attached to inner sides of the boom **160** and back mast **180,** with the side mast **170** deployed and with the main lifting line **165** (see Fig. 5F) attached to the hoist winch (not shown) on the ground, the auxiliary crane **200** may be operated to raise the lifting appliance **150** off the trailer bed **21** (see Fig. 5E) with the main lifting line **165** paying out from the hoist winch as the lifting appliance **150** rises to the top of the tower **50.**

At the top of the tower **50,** as seen in Fig. 5F, the lifting appliance **150** may be lifted to a position adjacent the nacelle **5** and directly in line with the bridge **110.** The auxiliary crane **200** may be mounted on the bridge **110** on an opposite side of the nacelle **5** from the lifting appliance **150,** thereby providing a direct line of access for moving the lifting appliance **150** into position over the bridge **110.** Further, the base **151** of the lifting appliance **150** is correctly oriented with respect to the bridge **110** so that a luffing movement of the auxiliary crane **200** may bring the base **151** over the bridge **110,** where the lifting appliance **150** may be lowered directly on to the bridge **110** to be mounted thereon with the base **151** straddling the beams **112, 114** of the bridge **110** as described above and as seen in Fig. 5G. The base **151** may be further secured to the bridge **110** with fasteners.

With the lifting appliance **150** mounted on the bridge **110,** rigging including the boom pendant **162** and the luffer pendants **182** may be raised from ground level using the auxiliary crane **200** or the jib crane **300.** At ground level, the luffer pendants **182** have already been connected to the luffer winch **187** and the foundation **55** of the tower **50,** as seen in Fig. 5I. The boom pendant **162** may be installed between the boom **160** and back mast **180,** and the luffer pendants **182** may be installed on the back mast **180** and connected to the spreader bar **184** as seen in Fig. 5H. However, before the rigging is installed, the lifting appliance **150** may be unfolded completely into a deployed configuration in the assembly position as seen in Fig. 5H. With the lifting appliance **150** in the deployed configuration and the assembly position, the hoist **164** may be in position over an attachment structure **17** on the hub **12** of the rotor **10.** The hoist **164** may then be connected to the attachment structure **17** in preparation for separating the rotor **10** from the turbine **1.** Connecting the hoist **164** to the attachment structure **17** before installing the rigging helps stabilize the boom **160** and back mast **180** during installation of the rigging.

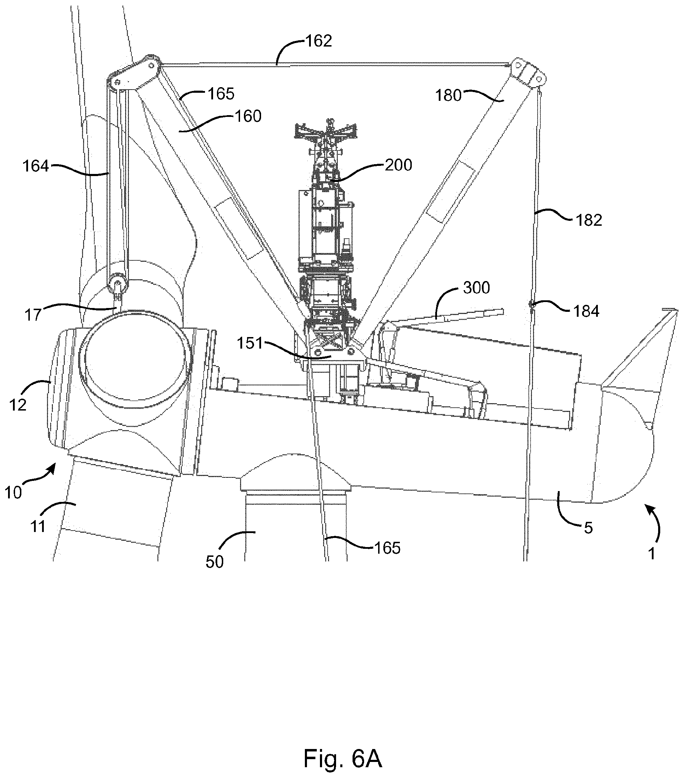

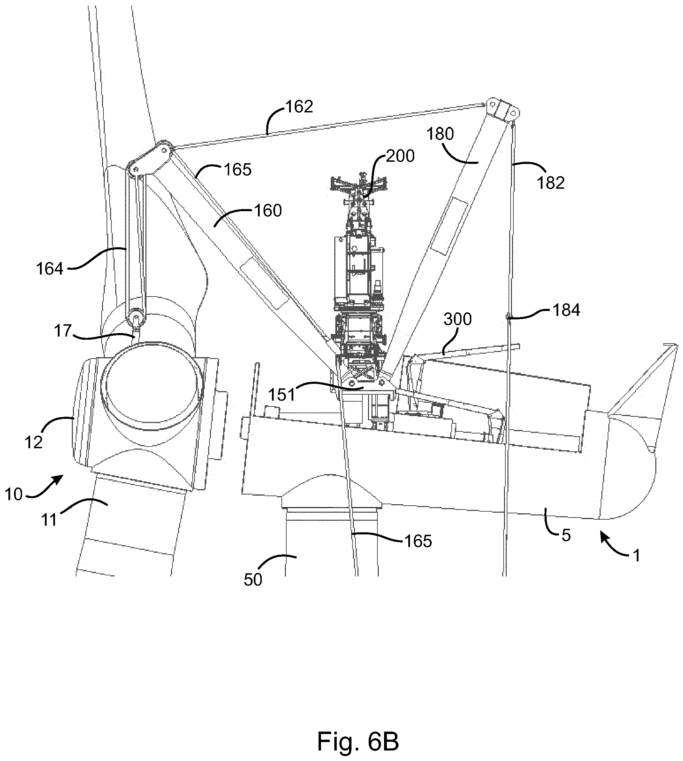

With reference to Fig. 6A, Fig. 6B, Fig. 6C and Fig. 6D, the lifting appliance **150** may be operated to remove and lower the rotor **10** of the turbine **1.** With the lifting appliance **150** in the deployed configuration and the assembly position, and the hoist **164** connected to the attachment structure **17** (see Fig. 6A), the hub **12** may be disconnected from the turbine **1,** if desired. After disconnecting the hub **12** from the turbine **1,** the hoist winch (not shown) may be operated to start lifting the rotor **10** (see Fig. 6A and Fig. 6C) and the luffer winch **187** may be operated to permit luffing of the boom **160** and back mast **180,** which involves the boom **160** and back mast **180** pivoting together on the base **151** in a forward direction thereby separating the rotor **10** from the turbine **1** and luffing the lifting appliance **150** into the working position (see Fig. 6B and Fig. 6D). During the luffing movement, the the fixed angle **θ** between the boom **160** and the back mast **180** remains the same. With the rotor **10** clear of the turbine **1,** the hoist winch (not shown) may be operated to lower the rotor **10** to ground level. A tailing crane (not shown) (e.g. a rough-terrain crane or crawler crane) supported on the ground may be used to carry the weight of the downward-facing blade, which prevents the downward-facing blade from contacting the ground during the lowering operation, and also controls rotation of the rotor from a vertical to a horizontal orientation.

Where appropriate, operations described above may be performed in reverse to mount a part on the wind turbine and/or to dismount the lifting appliance and/or the auxiliary crane from the wind turbine.

The novel features will become apparent to those of skill in the art upon examination of the description. It should be understood, however, that the scope of the claims should not be limited by the embodiments, but should be given the broadest interpretation consistent with the wording of the claims and the specification as a whole.

## Claims

1. A lifting system comprising:
a support structure configured to be reversibly mountable on a standing wind turbine; and,
a lifting appliance comprising:
a base configured to be reversibly mountable on the support structure;
a boom pivotally connected to the base;
a back mast pivotally connected to the base;
rigging connecting the boom to the back mast, and the back mast to a counterweight; and,
a hoist mounted on the boom, the hoist configured to be connectable to a part of the wind turbine when the support structure is mounted on the wind turbine and the base is mounted on the support structure.

2. The system of claim 1, wherein the support structure comprises a bridge mounted to torque arm supports of the wind turbine, the bridge comprising bridge supports mounted on the torque arm supports and at least one beam supported on the bridge supports, the at least one beam supported over a main shaft, a gearbox or both the main shaft and the gearbox of the wind turbine.

3. The system of claim 2, wherein the base of the lifting appliance comprises a bracket having opposed substantially vertically oriented downwardly disposed bracket arms, and the at least one beam is fitted between the opposed bracket arms when the base is mounted on the bridge.

4. The system of claim 3, wherein the at least one beam comprises two beams, a first beam situated over the main shaft of the wind turbine and a second beam situated over the gearbox of the wind turbine, and wherein the base comprises a first portion to which the boom is pivotally connected and a second portion to which the back mast is pivotally connected, wherein the first portion of the base is supported on the first beam and the second portion of the base is supported on the second beam.

5. The system of any one of claims 1 to 4, wherein the rigging comprises:
a boom pendant connecting the boom to the back mast; and,
first and second luffer pendants extending downward from the back mast on either side of a nacelle of the wind turbine, the luffer pendants connected to the counterweight and a luffer winch.

6. The system of claim 5, wherein the counterweight is a tower on which the wind turbine stands and the luffer pendants are connected to anchor bolts of the tower.

7. The system of claim 5 or 6, wherein:
the luffer pendants are horizontally separated from the back mast by a spreader proximate a top of the luffer pendants to permit the luffer pendants to extend downward on either side of the nacelle; and,
the luffer pendants are joined into a single line below the nacelle and above an upper luffer block containing a first set of sheaves, the single line threaded through the first set of sheaves of the upper luffer block and a second set of sheaves of a lower luffer block to form a block and tackle arrangement, the single line splitting into at least two lines below the lower luffer block, one of the at least two lines connected to the luffer winch and another of the at least two lines connected to the counterweight.

8. The system of any one of claims 1 to 7, wherein the boom and the back mast are deployable between a transport configuration and a deployed configuration and have a fixed angular relationship with respect to each other in the deployed configuration, and wherein the boom and the back mast pivot together between an assembly position and a working position, wherein the hoist is in position for connection to the part when the boom and back mast are in the assembly position and the hoist is in position for raising and lowering the part when the boom and back mast are in the working position.

9. The system of any one of claims 1 to 8, further comprising a hoist winch connected to the hoist by a lifting line, the hoist winch operable to raise and lower the hoist to raise and lower the part connected to the hoist, wherein the lifting appliance further comprises a side mast connected to the boom and deployable between a stowed configuration and an unstowed configuration, the side mast configured in the unstowed configuration to route the lifting line away from and down a side of the wind turbine to the hoist winch.

10. A method of mounting a lifting appliance on a standing wind turbine, the method comprising:
operating a first crane mounted on a standing wind turbine to raise a second crane up to the wind turbine, and securing the second crane to the wind turbine; and,
operating the second crane to raise the lifting appliance up to the wind turbine, and securing the lifting appliance to the wind turbine,
wherein the first crane is capable of lifting the second crane but incapable of lifting the lifting the appliance, the second crane is capable of lifting the lifting appliance but incapable of lifting a rotor of the wind turbine, and the lifting appliance is capable of lifting the rotor.

11. The method of claim 10, wherein:
the first crane is first operated to raise a support structure up to the wind turbine and the support structure is mounted to torque arm supports of the wind turbine, and then the first crane is operated to raise the second crane and the second crane is secured to the support structure, or
the first crane is first operated to raise a support structure up to the wind turbine, and the support structure comprises an outrigger portion on which the second crane is mounted, the outrigger portion extending outwardly from one side of a nacelle of the wind turbine when the support structure is mounted on the wind turbine.

12. The method of claim 11, wherein the support structure comprises a bridge, the bridge comprising bridge supports mounted on the torque arm supports and at least one beam supported on the bridge supports, the at least one beam supported over a main shaft, a gearbox or both the main shaft and the gearbox of the wind turbine, wherein the lifting appliance is secured to the at least one beam of the bridge.

13. The method of any one of claims 10 to 12, further comprising securing the lifting appliance to a tower on which the wind turbine stands, wherein the lifting appliance comprises a boom and a back mast pivotally connected to a base in a fixed angular relationship when the boom and back mast are deployed in a deployed configuration, the back mast secured to the tower below the wind turbine by at least one luffer pendant such that the at least one luffer pendant may be used to pivot the boom and back mast between an assembly position and a working position when the boom and back mast are in the deployed configuration, and the tower provides a counterweight when the lifting appliance is raising or lowering a part of the wind turbine.

14. A method of removing a part of a standing wind turbine, the method comprising:
performing the method of claim 13 including deploying the boom and back mast into the deployed configuration;
connecting a hoist of the lifting appliance to the part to be removed while the boom and back mast are in the assembly position;
pivoting the boom and back mast into the working position; and,
lowering the part.

15. The method according to claim 14, wherein the part is the rotor.
